# EUROPEAN PATENT APPLICATION

(11) **EP 4 624 271 A1**
(43) Date of publication of application: **01.10.2025**
(21) Application number: 25165551.0
(22) Date of filing: 24.03.2025
(51) Int. Cl.: B60R 16/04, B60K 1/04, B60L 50/64, H01M 50/249, H01M 50/262, H01M 50/271

(54) **IMPROVED FIXATION SYSTEM FOR A BATTERY PACK**

(30) Priority: 25.03.2024 IT 202400006592
(71) Applicant: On-Highway Brasil Ltda., 35.703-138 Sete Lagoas, Minas Gerais (BR)
(72) Inventor: COSTA, Daniel, 35.703-138 SETE LAGOAS (BR); OLIVEIRA, Anderson da Rocha, 35.703-138 SETE LAGOAS (BR); MONTEIRO, Thiago Matoso, 35.703-138 SETE LAGOAS (BR)
(74) Representative: Studio Torta S.p.A.

(57) **Abstract**

Fixation system (7) for a battery pack (2) comprising a plurality of walls (2a, 2b, 2c) connected together to define a space (3) for housing at least one electrical battery (4), the space (3) extending along a longitudinal, transversal, vertical axis (A', B', C'),

The fixation system (7) comprises a lever (8) provided with a first portion (8'), a second portion (8'') and a third portion (8‴) connecting together the first and second portions (8', 8''),
the fixation system (7) comprising a releasable fixed connection (9) for connecting the second portion to one of said walls (2a, 2b, 2c) and a compensable length connection (15) for fixing the first portion (8') to an element (5) coupled to at least one electrical battery (4).

## Description

### CROSS-REFERENCE TO RELATED APPLICATIONS

This patent application claims priority from Italian patent application no. 102024000006592 filed on March 25, 2024, the entire disclosure of which is incorporated herein by reference.

### TECHNICAL FIELD

The present invention concerns a fixation system for a battery pack.

The present invention finds its preferred, although not exclusive, application in vehicular field. Reference will be made to this application by way of example below.

### BACKGROUND OF THE INVENTION

Vehicles tends more and more to be electrified in order to reduce their pollutant emissions. Therefore, vehicles are more and more provided with batteries in order to allow the storing of electrical energy to allow the operation of the vehicle.

Accordingly, such batteries are stored in one or more battery packs in order to protect the batteries from the external environment, in particular from dirty elements, from fluids such as rain and by temperature variations.

However, due to the vibrations occurring into a vehicle, batteries could move. Such movement is dangerous because could lead to electrolyte fluid leakage or damages to the wirings or further lead to damages to the batteries themselves.

Accordingly, it is known to fix the batteries within the pack in which they are stored. Usually, this fixation is realized by bolts that are tightened between the battery and the pack.

However, the load provided to the bolts is usually excessive and this could lead to different problems. Indeed, excessive load stresses may damage batteries with consequently improper operation or fluid leakage.

Furthermore, excessive loads could lead to failures of the fixing system thereby freeing the batteries within the battery pack.

Therefore, the need is felt to avoid the aforementioned problems linked to the fixation of batteries in battery packs for vehicles.

An aim of the present invention is to satisfy the above mentioned needs in a cost-effective and optimized manner.

### SUMMARY OF THE INVENTION

The aforementioned aim is reached by a fixation system, a battery pack and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle comprising a battery pack provided with a fixation system according to the invention;
- Figure 2 is a perspective view, with parts removed for clarity, of a battery pack provided with a fixation system according to the invention;
- Figure 3 is a perspective view of a fixation system according to the invention; and
- Figure 4 is a perspective exploded view of a portion of a fixation system according to the invention.

### DETAILED DESCRIPTION OF THE INVENTION

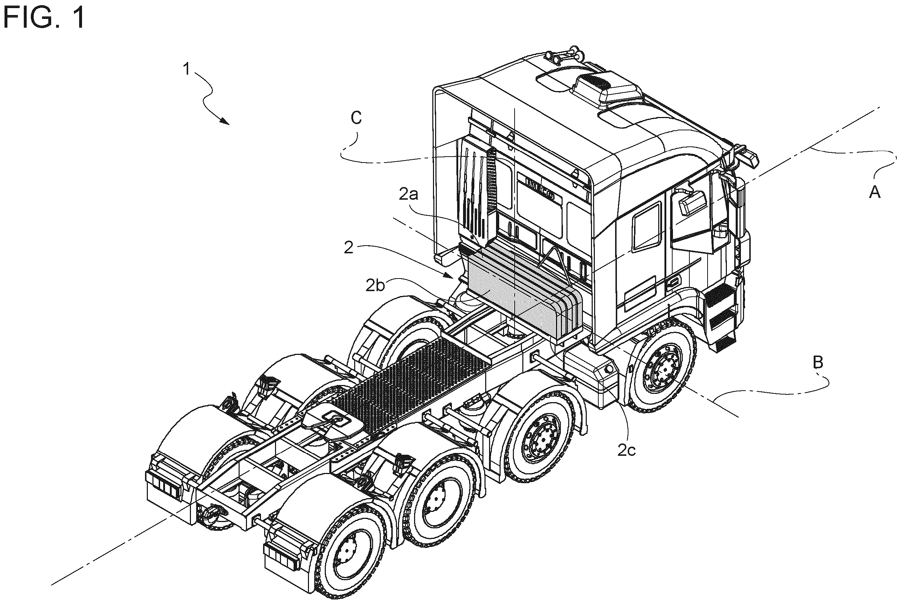

Figure 1 discloses a vehicle 1, such as a heavy vehicle e.g. a truck as shown, that extends along a longitudinal axis A, a transversal axis B and a vertical axis C.

The vehicle 1 comprises in particular a battery pack 2 configured to store at least an electrical battery (not shown) for allowing the operation of the vehicle.

It is specified that the disclosed disposition of the battery pack 2, its number and shape are merely exemplificative to discuss the below described invention.

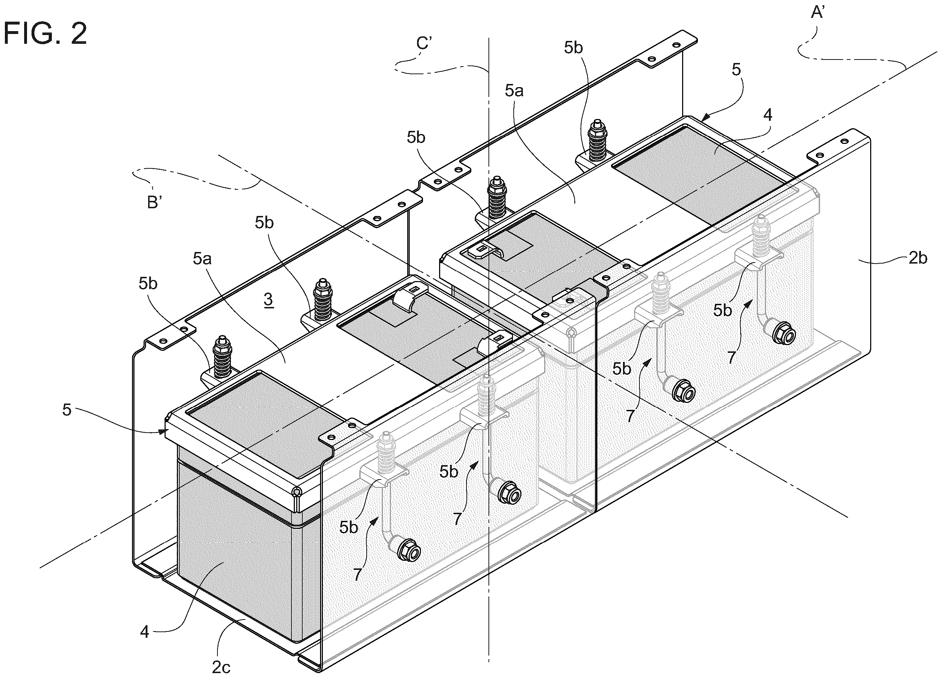

In detail, making reference to Figure 2, the battery pack 2 comprises a plurality of walls 2a, 2b, 2c connected together to define a space 3 for housing the aforementioned electric battery or batteries 4.

The battery pack 2 extends along a longitudinal axis A', a transversal axis B' and a vertical axis C'. In function of the disposition of the vehicle 1, the aforementioned longitudinal, transversal and vertical axis A', B', C' of the battery pack 2 may or may not coincide with the longitudinal, transversal and vertical axis A, B, C of the vehicle 1.

In detail, the battery pack 2 comprises a plurality of lateral walls 2a, a roof 2b and a base 2c connected together to define the aforementioned space 3. In the disclosed embodiment the walls 2a, 2b, 2c define a parallelepiped shape.

In the disclosed embodiment, the battery pack 2 defines a space 3 configured to house a pair of electrical batteries 4 placed one adjacent to the other along the longitudinal axis A' of the battery pack so that their shorter sides are faced one to the other.

The battery pack 2 further comprises a fixation system 7 configured to fix the at least one battery 4 to one of the walls 2a, 2b, 2c, to provide a compression load between the at least one battery 4 to the aforementioned wall 2a, 2b, 2c.

In detail, the fixation system 7 comprises a cover 5 coupled to at least one battery 4 and a lever 8 configured to be fixed between the cover 5 and another wall 2a, 2b, 2c of the battery pack 2 in order to provide the above-described compression load.

In the disclosed embodiment, the batteries 4 are fixed to the base 2c by fixation system 7. The fixation system comprises a cover 5 for each battery 4 and a plurality of levers 8 fixed between the lateral walls 2b and the cover 5 to provide a compression load between the cover 5 and the base 2c.

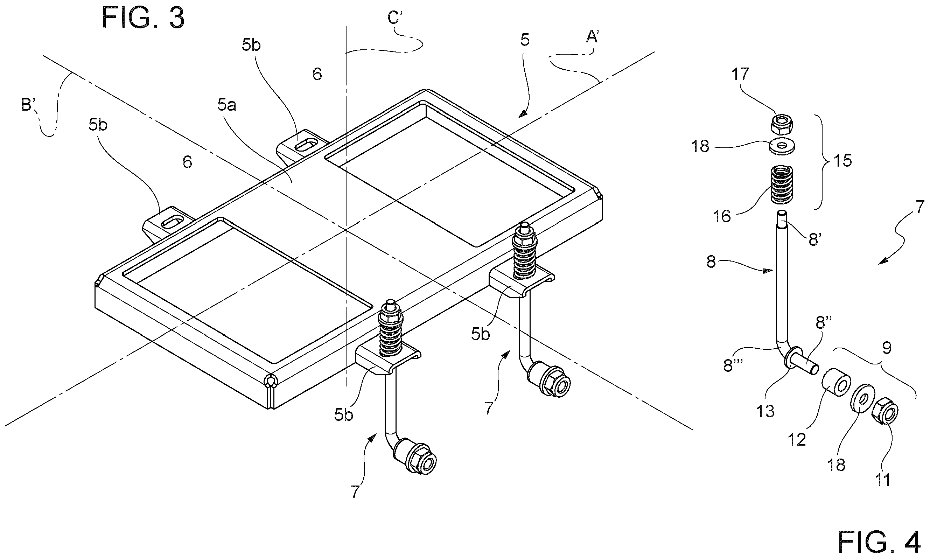

Making reference to figure 3, an exemplarily fixation system 7 for a battery 4 is disclosed. The cover 5 is shaped in order to match with an upper portion of the battery 4 and comprises a main portion 5a and a plurality of flanges 5b extending from the main portions 5a and defining at least one hole 6 for housing one lever 8 as described thereinafter.

In the disclosed embodiment, the main portion 5a has a substantial quadrangular shape and the flanges 5b extends from opposite sides of such quadrangular shape. In detail, a pair of flanges 5b extends from the longitudinal sides of the quadrangular shape of the main portion 5a.

In particular, each flange 5b is provided with a single hole 6 and, more preferably, as shown, the flanges 5b are symmetric with respect to longitudinal axis A'.

The flanges 5b therefore extends along transversal axis B' from the battery 4 towards the lateral walls 2b. In particular, the flanges 5b extends thereby defining a transversal gap with lateral walls 2b.

Preferably, cover 5 is realized as a single piece, at least for each battery, and is made of polymeric/plastic material.

Each lever 8 is substantially L-shaped, therefore comprises a first, longer, portion 8', a second, shorter, portion 8'' and a third portion 8‴ connecting together the first and second portions 8', 8''.

In detail, the lever 8 is L-shaped, therefore the first and second portions 8', 8'' are inclined one with respect to the other and in particular perpendicularly one with respect to the other. Third portion 8‴ can be preferably curved.

Preferably, the first, second and third portions 8', 8", 8‴ are realized as a single element. The lever 8 is preferably realized in metallic material.

According to the above-described shape and disposition of batteries 4 and cover 5, in use the second portion 8" extends along transversal axis B', while first portion 8' extends along a vertical axis C'.

In particular, the first portion 8' is fixed to the respective wall, i.e. one of the lateral walls 8b, via a resealable fixed connection 9. In detail, resealable fixed connection 9 comprises a nut 11 that can be screwed to the first portion 8'. Accordingly, lateral walls 8b defines a hole (not visible in the drawings) configured to allow the passage of the first portion 8' through the lateral wall 8b and the nut 11 couples to the first portion 8' outside space 3.

The resealable fixed connection 9 further comprises a spacer 12 housed about the first portion 8' within space 3 and configured to cooperate, in use, in contact between the lateral wall 8b and a shoulder 13 fixedly carried by the first portion 8'' at a preset position. Shoulder 13 is realized next to the third portion 8‴.

Conversely, the second portion 8'' is fixed to cover 5 via a compensable length connection 15. In detail, compensable length connection 15 is configured to vary its extension along vertical axis C.

In detail, compensable length connection 15 comprises a nut 17 configured to screw over the first portion 8' and elastic means 16 operatively interposed between the nut 17 and the battery 4, namely the cover 5. In particular, elastic means 16 are housed about the first portion 8' and vertically comprises between the nut 17 and the cover 5.

Preferably, elastic means 16 comprises a coil spring.

According to the above disposition, the first portion 8' is shaped to pass through openings 6 of flanges 5b and the elastic means 16 are configured to impart a force between flanges 5b and nut 17 in function of their compression due to the nut 17 screwing on the first portion 8'.

The resealable fixed connection 9 and the compensable length connection 15 may further comprise a washer 18 configured to avoid unscrew of the respective nuts 11, 17.

The operation of the embodiment of the invention as described above is the following.

The user may screw/unscrew the nuts 11, 12 to , respectively the first and second portions 8', 8'' to lock /unlock the batteries 4 within the battery pack 2. In particular, excessive loads are avoided by elastic means 16 of the compensable length connection 15.

In view of the foregoing, the advantages of a drainage system, a battery pack and a vehicle according to the invention are apparent.

Thanks to the proposed fixation system, any excessive stresses is compensated by the compensable length connection, thereby avoiding the drawbacks related to such stresses.

Moreover, the provided fixation system can be set quickly and needs a reduced number of components, while providing a stable and compact fixation of the batteries within the battery pack.

In particular, the fixation system is particularly versatile since the number of levers and the shape of the cover can allow the use of electrical batteries having different shapes one with respect to the other.

It is clear that modifications can be made to the described drainage system, battery pack and vehicle which do not extend beyond the scope of protection defined by the claims.

The shape of the battery pack and the number and shapes of batteries may vary. Similarly, the fixation systems may be of any shape and numbers.

The typology of the connections of the lever can be realized in any equivalent manner.

## Claims

1. Fixation system (7) for a battery pack (2) comprising a plurality of walls (2a, 2b, 2c) connected together to define a space (3) for housing at least one electrical battery (4), said space (3) extending along a longitudinal, transversal, vertical axis (A', B', C'),
said fixation system (7) comprises a lever (8) provided with a first portion (8'), a second portion (8'') and a third portion (8‴) connecting together the first and second portions (8', 8"),
the fixation system (7) comprising a releasable fixed connection (9) for connecting said second portion to one of said walls (2a, 2b, 2c) and a compensable length connection (15) for fixing said first portion (8') to said at least one electrical battery (4).

2. Fixation system according to claim 1, wherein said first and second portions (8', 8'') are inclined one with respect to the other.

3. Fixation system according to claim 1, wherein said first and second portions (8', 8'') are perpendicular one with respect to the other.

4. Fixation system according to any of the preceding claims, wherein said lever (8) is made in a single piece.

5. Fixation system according to any of the preceding claims, wherein said first portion (8') extends along said vertical axis (C'), said second portion (8") extends along said transversal axis (B').

6. Fixation system according to any of the preceding claims, wherein said releasable fixed connection (9) comprises a threaded connection.

7. Fixation system according to claim 6, wherein said releasable fixed connection (9) comprises a nut (11) configured to screw on said second portion (8").

8. Fixation system according to claim 7, further comprising a space (12) housed about said second portion (8") and operatively interposed between said one among said walls (2a, 2b, 2c) and a shoulder (13) fixedly carried by said second portion (8‴).

9. Fixation system according to any of the preceding claims, wherein said compensable length connection (15) comprises a nut (17) configured to screw on said first portion (8') and elastic means (16) operatively interposed between said element (5) and said nut (17).

10. Fixation system according to claim 9, wherein said elastic means (16) comprises a coil spring housed about said first portion (8').

11. Fixation system according to any of the preceding claims, further comprising a cover (5) coupled to said battery (4), said fixation system (7) being operatively interposed between said one among said plurality of walls (2a, 2b, 2c) and said cover (5).

12. Fixation system according to clam 11, wherein said cover (5) comprises a main portion (5a) in contact with said battery (4) and at least one flange (5b), said lever (8) being operatively interposed between said flange (5b) and said one among said plurality of walls (2a, 2b, 2c).

13. Battery pack according to claim 12, wherein said flange (15b) extend along said transversal axis (B') from said main portion (5a) towards said one among said plurality of walls (2a, 2b, 2c).

14. Battery pack assembly for a vehicle (1) comprising a battery pack (2) provided with a plurality of walls (2a, 2b, 2c) connected to define a space for housing at least an electrical battery (4), said battery pack assembly further comprising a fixation system (7) according to any of the preceding claims configured to fix said battery (4) configured to connect said battery (4) to one among said plurality of walls (2a, 2b, 2c).

15. Vehicle (1) comprised a battery pack assembly according to claim 14.
